# EUROPÄISCHE PATENTSCHRIFT

(11) **EP 1 348 528 B1**
(45) Veröffentlichungstag und Bekanntmachung des Hinweises auf die Patenterteilung: **22.03.2006**
(21) Anmeldenummer: 03405177.1
(22) Anmeldetag: 14.03.2003
(51) Int. Cl.: B28D 1/04, B23B 51/04

(54) **Führungseinsatz für eine Kernbohrkrone**
Guiding insert for a core drill
Insert de guidage pour outil de carottage

(30) Priorität: 25.03.2002 DE 10213217
(43) Veröffentlichungstag der Anmeldung: 01.10.2003
(73) Patentinhaber: HILTI Aktiengesellschaft, 9494 Schaan (LI)
(72) Erfinder: Bongers-Ambrosius, Hans-Werner, 88471 Laupheim (DE); Britten, Werner, 86899 Landsberg (DE); Doberenz, Sabine, 86836 Untermeitingen (DE)
(74) Vertreter: Wildi, Roland

(56) Entgegenhaltungen:
- DE-A- 3 737 024
- DE-A- 4 420 999
- DE-A- 4 441 275
- GB-A- 170 193
- US-A- 475 559
- US-A- 1 365 660
- US-A- 3 833 073
- US-A- 4 090 804
- PATENT ABSTRACTS OF JAPAN Bd. 2003, Nr. 05, 12. Mai 2003 (2003-05-12) -& JP 2003 025130 A (BABCOCK HITACHI KK), 29. Januar 2003 (2003-01-29)

## Beschreibung

Die Erfindung bezeichnet einen nach dem Anbohren abnehmbaren Führungseinsatz für eine Kembohrkrone gemäß dem Oberbegriff des Anspruchs 1, wie einen Dosensenker für Beton und Mauerwerk.

Eine solche Vorrichtung ist aus US4090804 bekannt.

Derartige Kembohrkronen weisen am Umfang verteilte Schneideinsätze in der Form von geometrisch undefinierten Schneiden mit diamantbesetzter Matrix oder geometrisch definierten Schneiden mit polykristallinen Diamanten auf.

Nach der DE4430141 weist ein Führungseinsatz für Kembohrkronen eine durch den Kronenboden hindurch wegtauchbare, zum Führungseinsatz axial vorgespannte, lange Zentrierspitze auf, indem der Führungseinsatz in den hohlen Schaft der Kembohrkrone eingesetzt wird. Eine derartig lange, ungeführte Zentrierspitze führt auf Grund der hohen Querkräfte beim Anbohren zu einem Weglaufen der Kembohrkrone.

Nach der DE4420999 weist ein, teilweise durch Radialfedem axial an der Innenwand der Kembohrkrone geführter, Führungseinsatz einen zwischen den Schneideinsätzen der Kembohrkrone radial auskragenden Führungsteller auf, welcher mit einem axial festen Zentrierbohrer versehen ist. Der Führungsteller weist einen durch Verdrehung hinter die Schneideinsätze axial arretierbaren Hinterschnitt auf. Der Zentrierbohrer ist ein zur Zentrierung eigentlich unnötiges Verschleissteil.

Nach der US4090804 ist ein Führungseinsatz für eine Kernbohrkrone, welcher zumindest teilweise axial an einer Innenwand der Kembohrkrone geführt ist, wobei ein zumindest teilweise axial über die Zähne überstehendes, koaxiales Zentriermittel vorhanden ist, und wobei das Zentriermitte! kürzer als die axiale Länge des Bohrrohres ausgebildet ist, innerhalb des Führungseinsatzes axial federnd vorgespannt, sowie axial begrenzt beweglich.

Die Aufgabe der Erfindung besteht in der Realisierung eines Führungseinsatzes für eine Kernbohrkrone, welcher ohne unnötige Verschleissteile ein präzises Anbohren ermöglicht.

Die Aufgabe wird im wesentlichen durch die Merkmale des unabhängigen Anspruchs gelöst. Vorteilhafte Weiterbildungen ergeben sich aus den Unteransprüchen.

Im wesentlichen ist ein Führungseinsatz für eine Kembohrkrone zumindest teilweise axial an einer Innenwand der Kembohrkrone geführt und kragt mit Auskragungen zwischen den, an einer Stirnseite eines Bohrrohres der Kembohrkrone vorhandenen, mehreren Schneideinsätzen radial aus, wobei ein zumindest teilweise axial über die Schneideinsätze überstehendes, koaxiales Zentriermittel vorhanden ist, welches kürzer als die axiale Länge des Bohrrohres ausgebildet, innerhalb des Führungseinsatzes axial federnd vorgespannt sowie axial begrenzt beweglich ist.

Durch das kürzer als die axiale Länge des Bohrrohres ausgebildete sowie innerhalb des Führungseinsatzes axial federnd vorgespannte, wegtauchbare Zentriermittel ist dieses im Führungseinsatz ausschliesslich an der präzisen Innenwand des Kronenrohres geführt und gegen Querkräfte kurz axial unterstützt, wodurch ein präzises Anbohren ermöglicht wird.

Vorteilhaft ist das Zentriermittel mit einer Spiraldruckfeder axial federnd vorgespannt, welche raumsparend koaxial zwischen dem Zentriermittel und dem Führungseinsatz anordenbar ist.

Vorteilhaft ist das Zentriermittel als Bolzen, weicher weiter vorteilhaft aus gehärtetem Stahl besteht, mit einer axial stimseitigen, kegelförmigen Zentrierspitze ausgefirhrt, wodurch eine Zentrierung ohne unnötige Verschleissteile, bspw. zum Erstellen eines Führungsloches, erfolgt

Vorteilhaft ist der Bolzen an einem, der Zentrierspitze axial gegenüberliegenden, Führungsschaft, radial verjüngt und gestuft abgesetzt, wodurch dieser als Axialanschlag für die Spiraidruckfeder dient.

Vorteilhaft ist der Bolzen formschlüssig drehfest im Führungseinsatz angeordnet, wodurch ein durch Relativdrehung verursachter Verschleiss vermieden wird.

Der Führungseinsatz weist einen durch Verdrehung hinter die Schneideinsätze axial arretierbaren Hinterschnitt auf, wodurch der Führungseinsatz gegen ein Herausfallen gesichert ist.

Vorteilhaft weist der Führungseinsatz ein an der Innenwand der Kembohrkrone koaxial geführtes, hülsenförmiges Einsatzmittel auf, welches weiter vorteilhaft aus Kunststoff besteht, wodurch eine technische einfache Fertigung bspw. durch Spritzglessen möglich ist.

Vorteilhaft weist das Einsatzmittel zumindest drei am Umfang des Innendurchmessers der zugeordneten Kernbohrkrone, weiter vorteilhaft gleichmässig, umfänglich beabstandete Führungsflächen auf, welche sich zumindest teilweise axial erstrecken, wodurch in einfacher Weise eine koaxiale Führung ermöglicht ist.

Vorteilhaft weist das Einsatzmittel jeweils umfänglich beabstandete, radial mehrfach diskret versetzte Führungsflächen auf, wodurch ein einzelner Führungseinsatz für Kembohrkronen mehrerer unterschiedlicher Durchmesser geeignet ist.

Vorteilhaft sind die Führungsflächen unmittelbar den radialen Auskragungen benachbart zugeordnet, wodurch die Aufnahme der Querkräfte unmittelbar an der Stirnseite des Bohrrohres mit den Schneideinsätzen erfolgt.

Die Erfindung wird bezüglich eines vorteilhaften Ausführungsbeispiels näher erläutert mit
- Fig. 1: als Führungseinsatz im Partial-Längsschnitt
- Fig. 2: als Führungseinsatz in Vorderansicht
- Fig. 3: als Variante in Rückansicht, nur das Einsatzmittel

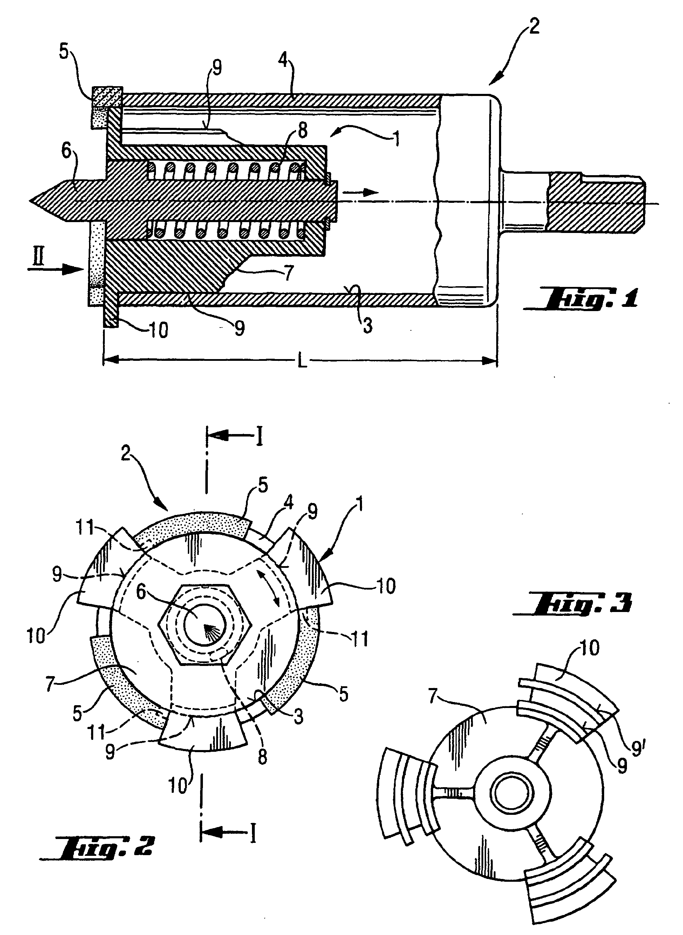

Nach Fig. 1 ist ein im Längsschnitt dargestellter Führungseinsatz 1 für eine Kernbohrkrone 2 teilweise axial an einer Innenwand 3 der Kembohrkrone 2 geführt , kragt zwischen den, an einer Stirnseite eines Bohrrohres 4 der Kernbohrkrone 2 vorhandenen, mehreren Schneideinsätzen 5 radial aus und schlägt axial an der Stirnseite des Bohrrohres 4 an. Ein teilweise axial über die Schneideinsätze 5 überstehendes, koaxiales Zentriermittel 6 ist als Bolzen mit einer axial stirnseitigen, kegelförmigen Zentrierspitze einem radial verjüngten, gestuft abgesetzten Führungsschaft ausgebildet. Das Zentriermittel 6 ist kürzer als die axiale Länge L des Bohrrohres 4 ausgebildet, gegenüber einem hülsenförmigen Einsatzmittel 7 mit einer, koaxial zwischen dem Führungsschaft des Zentriermittels 6 und dem Einsatzmittel 7 angeordneten, Spiraldruckfeder 8 axial federnd vorgespannt sowie axial begrenzt beweglich. Das Einsatzmittel 7 weist am Umfang des Innendurchmessers der zugeordneten Kembohrkrone 2 umfänglich beabstandete Führungsflächen 9 auf, welche sich teilweise axial erstrecken und unmittelbar radialen Auskragungen 10 benachbart zugeordnet sind.

Nach Fig. 2 ist der in Vorderansicht dargestellte Führungseinsatz 1, mit seinen drei radialen Auskragungen 10 in die Lücken zwischen den drei Schneideinsätzen 5 der Kembohrkrone 2 stirnseitig passend eingesetzt und mit je einem axial arretierbaren Steg 11 durch Verdrehung hinter die Schneideinsätze 5 verriegelt. Der Bolzen 6 ist durch ein Sechskantprofil im Einsatzmittel 7 formschlüssig drehfest, begrenzt axial beweglich geführt.

Nach Fig. 3 weist bei einer für zwei Kernbohrkronen unterschiedlichen Durchmessers geeigneten Variante das in der Rückansicht dargestellte Einsatzmittel 7 umfänglich beabstandete, radial doppelt diskret versetzte Führungsflächen 9, 9' auf, welche sich jeweils teilweise axial erstrecken und unmittelbar den drei paarweise gemeinsamen radialen Auskragungen 10 benachbart zugeordnet sind. Eine derartige Variante für eine weitere Anzahl unterschiedlicher Durchmesser, bspw. drei oder vier, ist entsprechend mit dreifach oder vierfach radial diskret versetzten Führungsflächen 9 auszuführen.

## Patentansprüche

1. Führungseinsatz für eine Kembohrkrone (2), welcher zumindest teilweise axial an einer Innenwand (3) der Kembohrkrone (2) geführt ist,
wobei ein zumindest teilweise axial über Schneideinsätze (5) überstehendes, koaxiales Zentriermittel (6) vorhanden ist, welches
kürzer als die axiale Länge (L) des Bohrrohres (4) ausgebildet, innerhalb des Führungseinsatzes axial federnd vorgespannt, sowie axial begrenzt beweglich ist, **dadurch gekennzeichnet, dass** der Führungseinsatz
zwischen den, an einer Stirnseite eines Bohrrohres (4) der Kernbohrkrone (2) vorhandenen, mehreren Schneideinsätzen (5) mit Auskragungen (10) radial auskragt, und dass
ein durch Verdrehung hinter die Schneideinsätze (5) axial arretierbarer Steg (11) vorhanden ist.

2. Führungseinsatz nach Anspruch 1, **dadurch gekennzeichnet, dass** das Zentriermittel (6) mit einer Spiraldruckfeder (8) axial federnd vorgespannt ist.

3. Führungseinsatz nach Anspruch 1 oder 2, **dadurch gekennzeichnet, dass** das Zenfiemnittel (6) als Bolzen, welcher optional aus gehärtetem Stahl besteht, mit einer axial stimseitigen, kegelförmigen Zentrierspitze ausgeführt ist.

4. Führungseinsatz nach Anspruch 3, **dadurch gekennzeichnet, dass** der Bolzen an einem, der Zentrierspitze axial gegenüberliegenden, Führungsschaft, radial verjüngt und gestuft abgesetzt ist.

5. Führungseinsatz nach Anspruch 3 oder 4, **dadurch gekennzeichnet, dass** der Bolzen formschlüssig drehfest im Führungseinsatz angeordnet ist.

6. Führungseinsatz nach einem der vorherigen Ansprüche, **dadurch gekennzeichnet, dass** ein an der Innenwand (3) der Kembohrkrone (2) koaxial geführtes, hülsenförmiges Einsatzmittel (7) vorhanden ist, welches optional aus Kunststoff besteht.

7. Führungseinsatz nach Anspruch 6, **dadurch gekennzeichnet, dass** das Einsatzmittel (7) zumindest drei am Umfang des Innendurchmessers der zugeordneten Kembohrkrone (2), optional gleichmässig, umfänglich beabstandete Führungsflächen (9, 9') aufweist, welche sich zumindest teilweise axial erstrecken.

8. Führungseinsatz nach Anspruch 7, **dadurch gekennzeichnet, dass** das Einsatzmittel (7) jeweils umfänglich beabstandete, radial mehrfach diskret versetzte Führungsflächen (9,9') aufweist.

9. Führungseinsatz nach Anspruch 7 oder 8, **dadurch gekennzeichnet, dass** die Führungsflächen (9, 9') unmittelbar den radialen Auskragungen (10) benachbart zugeordnet sind.

## Claims

1. Guide insert for a core drill (2) which, at least partially, is guided axially on an inner wall (3) of the core drill (2), wherein a coaxial centring means (6), projecting axially, at least partially, from cutting inserts (5), which means is designed shorter than the axial length (L) of the drill tube (4), is spring pre-tensioned axially inside the guide insert, and whose movement is limited axially, **characterised in that** the guide insert radially projects with projections (10) between the several cutting inserts (5) present on the front of a drill tube (4) of the core drill (2), and **in that** a bridge (11) is provided that can be axially stopped behind the cutting inserts (5) by twisting.

2. Guide insert according to Claim 1, **characterised in that** the centring means (6) is spring pre-tensioned axially with a spiral compression spring (8).

3. Guide inert according to Claim 1 or 2, **characterised in that** the centring agent (6) is constructed as a bolt, which consists optionally of hardened steel, with a conical centring pin at the front.

4. Guide insert according to Claim 3 **characterised in that** the bolt is placed, radially reduced and stepped, on a guide shaft that is axially opposed to the centring pin.

5. Guide insert according to Claim 3 or 4, **characterised in that** the bolt is arranged positively clamped in the guide insert to prevent rotation.

6. Guide insert according to any of the preceding claims, **characterised in that** a sleeve-shaped insert means (7), coaxially guided on the inner wall (3) of the core drill (2) is provided, consisting optionally of plastic.

7. Guide insert according to Claim 6, **characterised in that** the insert means (7) exhibits at least three optionally uniformly, circumferentially spaced guide faces (9, 9') on the periphery of the inside diameter of the assigned core drill (2), which faces extend at least partially axially.

8. Guide insert according to Claim 7, **characterised in that** the insert means (7) exhibits guide faces (9, 9') that are circumferentially spaced and discretely offset radially several times.

9. Guide insert according to Claim 7 or 8, **characterised in that** the adjacent guide faces (9, 9') are assigned directly to the radial projections (10)

## Revendications

1. Insert de guidage pour une couronne de carottage (2), lequel est guidé au moins partiellement axialement contre une paroi intérieure (3) de la couronne de carottage (2), un moyen de centrage coaxial (6) qui dépasse au moins partiellement au-dessus de taillants rapportés (5) étant prévu, lequel est plus court que la longueur axiale (L) du tube de forage (4), est soumis à une précontrainte élastique axiale à l'intérieur de l'insert de guidage et possède une mobilité axiale réduite, **caractérisé en ce que**, par l'intermédiaire de parties saillantes (10), l'insert de guidage fait radialement saillie entre les différents taillants rapportés (5) prévus sur une face frontale d'un tube de forage (4) de la couronne de carottage (2), et **en ce qu'**il est prévu une nervure (11) pouvant être bloquée axialement par rotation derrière les taillants rapportés (5).

2. Insert de guidage selon la revendication 1, **caractérisé en ce que** le moyen de centrage (6) est soumis à une précontrainte élastique axiale par un ressort de compression hélicoïdal (8).

3. Insert de guidage selon la revendication 1 ou 2, **caractérisé en ce que** le moyen de centrage (6) est conformé en goujon, lequel est réalisé optionnellement en acier trempé, avec une pointe de centrage conique axiale frontale.

4. Insert de guidage selon la revendication 3, **caractérisé en ce qu'**au niveau d'une tige de guidage située axialement à l'opposé de la pointe de centrage, le goujon présente un rétrécissement radial et un décrochement étagé.

5. Insert de guidage selon la revendication 3 ou 4, **caractérisé en ce que** le goujon est solidarisé en rotation par complémentarité de formes dans l'insert de guidage.

6. Insert de guidage selon une des revendications précédentes, **caractérisé en ce qu'**il est prévu un moyen rapporté en forme de manchon (7) qui est guidé coaxialement contre la paroi intérieure (3) de la couronne de carottage (2) et qui est réalisé optionnellement en matière plastique.

7. Insert de guidage selon la revendication 6, **caractérisé en ce que** le moyen rapporté (7) comporte au moins trois surfaces de guidage (9, 9') qui sont disposées en périphérie à distance, optionnellement régulière, les unes des autres sur la circonférence du diamètre intérieur de la couronne de carottage associée (2) et qui s'étendent au moins partiellement axialement.

8. Insert de guidage selon la revendication 7, **caractérisé en ce que** le moyen rapporté (7) comporte des surfaces de guidage périphériquement distantes (9, 9') étagées radialement sur plusieurs niveaux distincts.

9. Insert de guidage selon la revendication 7 ou 8, **caractérisé en ce que** les surfaces de guidage (9, 9') sont associées directement aux parties radiales saillantes (10) au voisinage de celles-ci.
